# EUROPÄISCHE PATENTSCHRIFT

(11) **EP 2 090 918 B1**
(45) Veröffentlichungstag und Bekanntmachung des Hinweises auf die Patenterteilung: **18.04.2012**
(21) Anmeldenummer: 09000742.8
(22) Anmeldetag: 21.01.2009
(51) Int. Cl.: G02B 21/34, G02B 27/32, G01M 11/00, G02B 21/00

(54) **Kalibriervorrichtung und Laser-Scanning-Mikroskop mit einer derartigen Kalibriervorrichtung**
Calibrating device and laser scanning microscope with such a calibrating device
Dispositif de calibrage et microscope à balayage laser doté d'un tel dispositif de calibrage

(30) Priorität: 30.01.2008 DE 102008007178
(43) Veröffentlichungstag der Anmeldung: 19.08.2009
(73) Patentinhaber: Carl Zeiss MicroImaging GmbH, 07745 Jena (DE)
(72) Erfinder: Netz, Ralf, 07745 Jena (DE); Bathe, Wolfgang, 07743 Jena (DE); Kleinschmidt, Werner, 37139 Adelebsen (DE); Fahlbusch, Ingo, 37077 Göttingen (DE); Brehm, Michael, 74429 Sulzbach-Laufen (DE); Steinert, Jörg, 07743 Jena (DE)
(74) Vertreter: Hampe, Holger

(56) Entgegenhaltungen:
- EP-A1- 1 162 450
- EP-A1- 2 071 387
- WO-A1-2004/104522
- WO-A2-99/42885
- DE-A1- 10 155 002
- DE-A1- 10 228 477
- DE-A1-102005 020 542
- JP-A- 2002 168 784

## Beschreibung

Bei konfokalen Laser-Scanning-Mikroskopen (LSM) wird von mindestens einem Laser als Anregungsstrahl erzeugte Laserstrahlung über eine Ablenkeinrichtung (Scanner), eine Scanoptik und eine Tubuslinse geführt und mittels eines Objektivs beugungsbegrenzt in ein zu untersuchendes Präparat fokussiert. Aufgrund einer Wechselwirkung des Anregungsstrahls mit dem Präparat gelangt emittierte Fluoreszenzstrahlung über den Scanner auf einen dichroitischen Strahlenteiler, der die Fluoreszenzstrahlung von der Anregungsstrahlung getrennt in einen Detektionsstrahlengang lenkt. Die Fluoreszenzstrahlung wird anschließend auf eine konfokale Blende, das Pinhole, fokussiert, das in dem Detektionsstrahlengang in einer zur Fokusebene konjugierten Ebene angeordnet ist. Nach Passieren eines Blockfilters zur nochmaligen Unterdrückung der Anregungsstrahlung wird die Fluoteszenzstrahlung mittels eines Photomultipliers (PMT) gemessen.

Aufgrund der Vielzahl an Komponenten bestehen bei Laser-Scanning-Mikroskopen vielfältige Leistungsfähigkeitstest- und Kalibrieraufgaben, die bei der Fertigung und für Nutzer von enormer Bedeutung sind.

Es besteht deshalb die Aufgabe, die Vielfalt der Leistungsfähigkeitstest- und/oder Kalibrieraufgaben zeitsparend mit einfachen Mitteln zu bewältigen.

Die Aufgabe wird erfindungsgemäß durch ein Verfahren gemäß Anspruch 1 gelöst.

Besonders zweckmäßige und vorteilhafte Ausgestaltungen und Weiterbildungen der Erfindung ergeben sich aus den abhängigen Ansprüchen.

Die Kalibriervorrichtung bildet eine durch die feste Kombination aus fokussieroptik und Kalibrierstruktur hinsichtlich temperaturbedingter Fokuslagen-Änderungen besonders widerstandsfähige Baueinheit, mit der sich in einem zu prüfenden Gerätesystem ein Testbild erzeugen lässt, das zur Vermessung und Beurteilung der Leistungsfähigkeit des Gerätesystems geeignet ist. Dabei ist es gleichgültig, wie das Testbild erzeugt wird, solange es die gewünschten Eigenschaften besitzt, indem z. B. eine sehr kleine Teststruktur mit einem hoch vergrößernden Objektiv als Fokussieroptik eingesetzt werden kann. Ebenso lässt sich ein gleiches Testbild auch mit größerer Teststruktur und einem Objektiv mit geringerer Vergrößerung erzeugen. Andere übergreifende Abstimmungen sind durchführbar. Es lässt sich z. B. eine unerwünschte Wölbung der Fokalebene der Fokussieroptik kompensieren, indem eine Teststruktur eingesetzt wird, die dieser Bildfeldwölbung angepasst ist. Resultierend ergibt sich bildseitig ein erwünschtes flaches Testbild.
Insgesamt lassen sich an der Kalibriervorrichtung folgende Abstimmungen vornehmen:
- eine Abstimmung der objektseitigen Schärfentiefe der Kalibriervorrichtung wesentlich größer als die thermische Ausdehnung der verwendeten Materialien ermöglicht auf einfache Weise die Realisierung einer temperaturstabilen Kalibriervorrichtung,
- Ausgleich der geometrischen Verzerrungen der Fokussieroptik durch die Teststruktur und
- Ausgleich einer gewölbten Fokusebene durch Verwendung einer gewölbten Struktur.

Auch verbleibende Abbildungsfehler der Kalibriervorrichtung müssen nicht notwendigerweise eine Einschränkung der Eignung als Kalibriermittel bedeuten.
Eine nicht zu kompensierende Abbildungseigenschaft bildet beispielsweise ein Farbquerfehler der Fokussieroptik, der die Teststruktur bei einer Detektion mit verschiedenen Wellenlängen unterschiedlich groß erscheinen lässt. Dennoch ist exakte Vermessung z. B. der Vergrößerung eines Laser-Scanning-Mikroskops möglich, indem bei der Auswertung der gemessenen Teststruktur der Farbquerfehler der Fokussieroptik berücksichtigt und herausgerechnet wird.

Insbesondere ist ein Austausch der Teststruktur ohne erforderliche Justage von Vorteil, wofür die Fassung derart ausgebildet ist, dass die laterale und axiale Lage der Teststruktur innerhalb der Kalibriervorrichtung bei einer Auswechslung stets gleich bleibt.

Eine vorteilhafte Ausgestaltung besteht darin, dass der Teststruktur entgegengesetzt zur Fokussieroptik eine zur Durchstrahlung der Teststruktur in Richtung der Fokussieroptik ausgebildete Beleuchtungseinrichtung benachbart ist.
Die vorteilhaft als LED ausgebildete Beleuchtungsquelle kann in der gemeinsamen Fassung gehaltert sein oder aber es wird die Halogenlampe des Laser-Scanning-Mikroskops als Durchlichtquelle verwendet.

Vorteilhaft kann die Teststruktur als Strukturelemente reflektierende Gitterelemente aufweisen. Derartige, z. B. aus Chrom bestehende Strukturelemente erweisen sich als besonders geeignet, da diese die Kalibrierung der Scanfeldgrößen, der Linearität der Scanner-Bewegung oder die Korrektur von Nichtlinearitäten in den Abbildungseigenschaften des optischen Systems erlauben. Insbesondere können die Gitterelemente als in x- und in y-Richtung periodisch strukturierte Gitter ausgebildet sein, die auch unterschiedliche Periodenlängen zur Realisierung unterschiedlicher Abtastfrequenzen aufweisen können.

Ferner kann die Teststruktur auch Strukturelemente für einen Sterntest enthalten.

Zur Justierung und Kalibrierung moderner, Fluoreszenzlicht detektierender Mikroskope sind Kalibriermittel erforderlich, die Fluoreszenzlicht als Antwort auf Bestrahlung mit Anregungslicht abgeben können. Es ist deshalb von Vorteil, wenn zwischen den reflektierenden Gitterelementen fluoreszierende Zwischengitterbereiche ausgebildet sind.

In einer Ausgestaltung sind die reflektierenden Gitterelemente auf einem strahlungsdurchlässigen Träger aufgebracht und von einer Schicht aus fluoreszierendem Material überdeckt. Als fluoreszierendes Material können für Ein- und/oder Multi-Photonen-Anregung geeignete Feststoffe oder Farbstofflösungen vorgesehen sein. Insbesondere ist es auch von Vorteil, wenn das durch das fluoreszierende Material abgegebene Fluoreszenzlicht definierte Spektral- und Polarisatbnseßgenschaften aufweist, so dass derartige Eigenschaften vom Detektionssystem des Mikroskops erfasst werden können. Schichtdicken des fluoreszierenden Materials, die deutlich kleiner sind als die axiale Fokuslänge (z. B. < 100 nm) eignen sich besonders zur Vermessung der Anregungs-und Detektions-PSF (PSF = Point-Spread-Funktion).

In einer anderen Ausführung können auch fluoreszierendes Glas oder fluoreszierendes Halbleitermaterial als Träger der reflektierenden Gitterelemente dienen.

Zur Bestimmung der Ausleuchtungshomogenität in einem Laser-Scanning-Mikroskop kann die Teststruktur als Leuchtelement mit homogen leuchtenden flächenbereichen und mit einer leuchtenden regelmäßigen Gitterstruktur ausgebildet sein, wobei sich die Leuchteigenschaften der Flächenbereiche und der Gitterstruktur nachweisbar unterscheiden.

Eine weitere Ausgestaltung sieht vor, dass die Teststruktur zur Erzeugung einer Punktlichtquelle eine im Durchlicht durchstrahlbare Ein-Loch-Maske enthält.

Die Teststruktur kann insbesondere auch in Bereiche gegliedert sein, wobei ein Bereich reflektierende Gitterelemente und fluoreszierende Bereiche aufweist und ein anderer Bereich als Ein-Loch-Maske ausgebildet ist.

Sowohl geometrische Strukturen als auch durch Materialeigenschaften bestimmte Bereiche der Teststruktur sollten räumlich derart separiert sein, dass sich unterschiedliche Kalibrierprozesse nicht behindern.

Es wird ein Laser-Scanning-Mikroskop vergeschlagen, bei dem eine Kalibriervorrichtung, die zueinander in einer gemeinsamen Fassung fest ausgerichtet eine Fokussieroptik und eine in der Fokalebene der Fokussieroptik angeordnete Teststruktur mit im Auflicht und/oder im Durchlicht nachweisbaren Strukturelementen aufweist, in den Mikroskop-Strahlengang einschaltbar ist.

Insbesondere ist die Einschaltung in den Mikroskop-Strahlengang an Positionen vorgesehen, wo die Pupille der Fokussieroptik mit der Objektivpupille des Laser-Scanning-Mikroskops zusammenfällt oder in einer dazu konjugierten Ebene liegt.

Weitere Merkmale der in den Mikroskop-Strahlengang einschaltbaren Kalibriervorrichtung ergeben sich aus den auf die Kalibriervorrichtung sich beziehenden abhängigen Ansprüchen.

In einer bevorzugten Ausgestaltung ist die Kalibriervorrichtung zusammen mit weiteren Objektiven in einem Mehrfachobjektivwechsler gehaltert.

Besonders vorteilhaft ist es, wenn die Fokussieroptik der Kalibriervorrichtung eine gegenüber den weiteren Objektiven in dem Mehrfachobjektivwechsler verkürzte Abgleichlänge (Abstand zwischen Objektebene im Präparat und Anlagefläche des Objektivs am Mehrfachobjektivwechsler) aufweist. Dadurch können durch Einschalten der Kalibriervorrichtung in den Mikroskopstrahlengang auch Kalibriermessungen durchgeführt werden, während sich ein applikatives Präparat auf dem Objekttisch des Mikroskops befindet. Eine Kollision mit dem Präparat kann dadurch ausgeschlossen werden.

Gegenstand der Erfindung ist ein Verfahren zur Bestimmung und Korrektur des Justierzustandes zwischen Anregungs- und Detektionsstrahlengang eines Laser-Scanning-Mikroskops gemäß den Merkmalen des Anspruches 1.

Einer optimalen Signaleinstellung bei dem Verfahren förderlich ist die gleichzeitige Aufnahme des Reflexions- und des Durchlichtbildes in voneinander getrennten Detektionskanälen, wodurch Veränderungen an der Ablenkeinrichtung (z. B. Drift/Jitter des Mittelpunktes des Scan-Feldes) keinen negativen Einfluss ausüben. Die Bestimmung und Korrektur der gegenseitigen Positionsablagen kann vorteilhaft automatisch durch Kreuzkorrelation erfolgen.

Die Erfindung soll nachstehend anhand der schematischen Zeichnung näher erläutert werden. Es zeigen:
- Fig. 1: eine erste Ausführung einer Kalibriervorrichtung
- Fig. 2: eine zweite Ausführung einer Kalibriervorrichtung
- Fig. 3: eine Teststruktur für die Justage und Kalibrierung geometrischer Mikroskopgrößen
- Fig. 4: eine im Strahlengang eines konfokalen Laser-Scanning-Mikroskops angeordnete Kalibriervorrichtung zur Bestimmung des Justierzustandes zwischen Anregungs- und Detektionsstrahlengang zur Durchführung des erfindungsgemäßen Verfahrens
- Fig. 5: ein Reflexionsbild einer Teststruktur mit reflektierenden Gitterelementen
- Fig. 6: ein Durchlichtbild vom selben Testgitter wie in Fig. 5
- Fig. 7: ein Korrelationsfenster für einen mittels Bildaufnahme anhand eines Reflexions- und eines Durchlichtbildes ermittelten Justierzustand zwischen Anregungs- und Detektionsstrahlengang
- Fig. 8: eine Überlagerung von Reflexions- und Durchlichtbild aus Fig. 6 und 7
- Fig. 9: einen Schnitt in x- und y-Richtung durch die in Fig. 8 überlagerten Bildstrukturen
- Fig. 10: eine Teststruktur mit reflektierenden Gitterstrukturen und fluoreszierenden Zwischengitterbereichen
- Fig. 11: eine Teststruktur mit homogen leuchtender Fläche und darauf befindlichen leuchtenden Gitterstrukturen
- Fig. 12: ein von der Teststruktur gemäß Fig. 11 aufgenommenes Testbild
- Fig. 13: das von der Gitterstruktur bereinigte Testbild gemäß Fig. 12
- Fig. 14: einen Linsenschnitt durch eine in der Kalibriervorrichtung vorgesehene Fokussieroptik

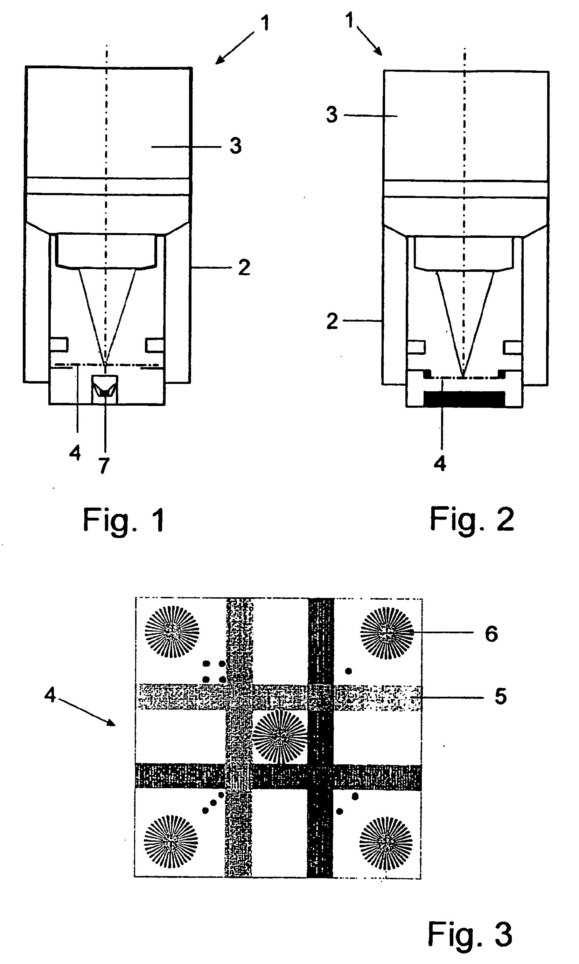

Die in Fig. 1 gezeigte Kalibriervorrichtung 1 enthält in einer gemeinsamen Fassung 2 eine Fokussieroptik 3 und eine in der Fokalebene FE der Fokussieroptik 3 austauschbar und justiert zur Fokussieroptik 3 angeordnete Teststruktur 4. Die feste Positionierung von Fokussieroptik 3 und Teststruktur 4 zueinander gewährleistet, auf Dauer KontrollMessungen durchführen zu können. Die Teststruktur 4 weist geometrische und/oder durch Materialeigenschaften bestimmte Strukturelemente auf, die im Auflicht und/oder im Durchlicht nachweisbar sind.

In der Ausführung gemäß Fig. 3 sind die Strukturelemente als Testgitter mit reflektierenden Gitterelementen 5 z. B. für die Linearisierung bzw. Kalibrierung der Scannerbewegung oder für einen Sterntest als Siemensstern 6 ausgebildet. Die Strukturbreiten sollten in der Größe der Point-Spread-Funktion (PSF) der Fokussieroptik 3 liegen. Liegen diese darunter, verringert sich im Durchlicht der Hell-Dunkel-Kontrast. Eine erste Ausführung der Kalibriervorrichtung 1 enthält eine mit der Fassung 2 verbundende Beleuchtungseinrichtung 7 zur Weitfeldbeleuchtung, wie z. B. eine LED, die der Teststruktur 4 entgegengesetzt zu der Fokussieroptik 3 benachbart und somit für eine Durchstrahlung der Teststruktur 4 in Richtung der Fokussieroptik 3 ausgebildet ist.

Die in Fig. 2 gezeigte Ausführung der Kalibriervorrichtung 1 ist bevorzugt für Justier- und Kalibrieraufgaben im Auflicht vorgesehen und verzichtet im Unterschied zu der Ausführung gemäß Fig. 1 auf eine in die Vorrichtung integrierte Beleuchtungseinrichtung. Die Strukturelemente der mit der Fassung austauschbar verbundenen Teststruktur erfüllen ihren Zweck außer durch ihre geometrische Form und Anordnung zueinander durch fluoreszierende Eigenschaften fester oder flüssiger Materialien.

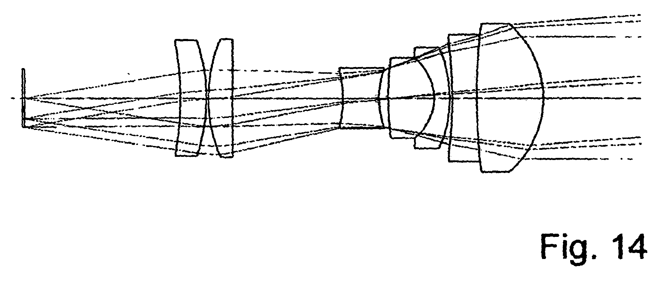

Für beide Ausführungen gemäß Fig. 1 und 2 wird bevorzugt ein PlanApochromat 5x / 0.16 gemäß Fig. 14 als Fokussieroptik verwendet.

Mit der Kalibriervorrichtung kann eine Vielzahl automatisierbarer Kalibrier- und Testaufgaben durchgeführt werden.

### Qualität des Justierzustandes zwischen Anregungs- und Detektionsstrahlengang

Eine wesentliche, die Leistungsfähigkeit eines Laser-Scanning-Mikroskops bestimmende Zustandskenngröße ist die Qualität des Justierzustandes zwischen Anregungs- und Detektionsstrahlengang, die durch eine gleiche Lage des Bildes des Pinholes und des Anregungsstrahls in dem Präparat oder eine gleiche Lage des Bildes des Anregungsstrahls in der Pinhole-Ebene und des Pinholes charakterisiert ist.

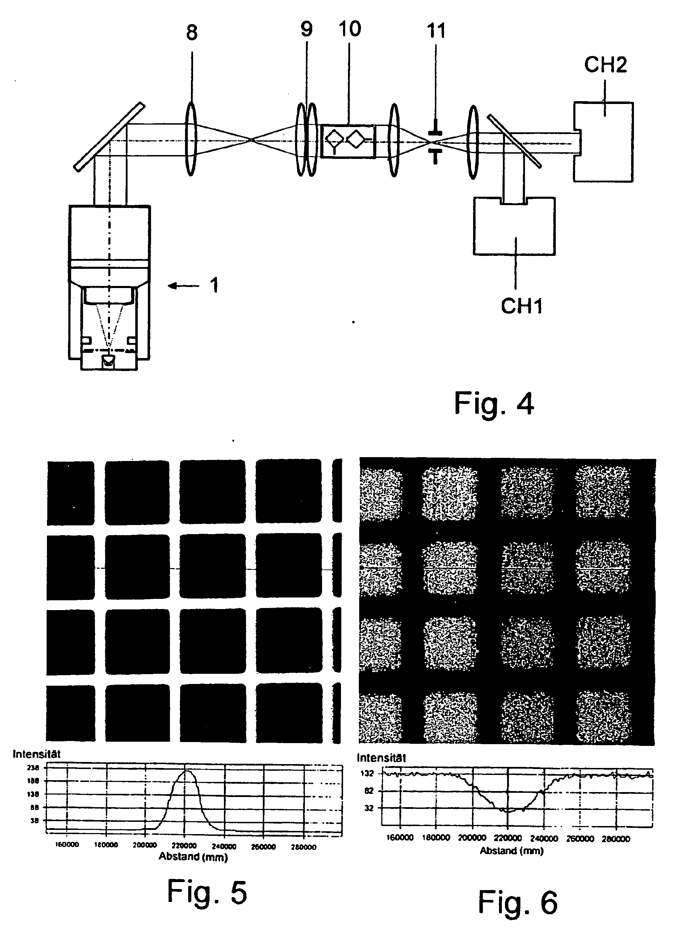

Zur Ermittlung des Justierzustandes dient eine optische Anordnung gemäß Fig. 4, bei der eine gemäß Fig. 1 ausgebildete Kalibriervorrichtung 1 in den Strahlengang eines konfokalen Laser-Scanning-Mikroskops gebracht wird, von dem ein Teil des Strahlenganges mit Tubuslinse 8, Scanobjektiv 9, Scanner 10 und Pinhole 11 dargestellt sind. Dem Pinhole 11 im Detektionsstrahlengang nachgeordnet sind zwei Empfangskanäle CH1 und CH2 zur simultanen Bildaufnahme, wobei in dem Kanal CH1 ein Reflexionsbild und in dem anderen Kanal CH2 ein Durchlichtbild von der Teststruktur 4 aufgenommen wird. Sollte die Detektion in Reflexion aufgrund zu großer Laserunterdrückung unmöglich sein, so kann auch die vom Anregungsstrahl erzeugte Fluoreszenz bei geöffnetem Pinhole 11 als Auflichtbild detektiert werden. Auf diese Weise ist ebenfalls die Position des Anregungsstrahlenganges bestimmbar, lediglich die hellen Bereiche eines Reflexionsbildes erscheinen dann dunkel im Bild.

Die Kalibriervorrichtung 1 wird insbesondere derart in den Strahlengang gebracht, dass die Pupille der Fokussieroptik 3 mit der Objektivpupille des Laser-Scanning-Mikroskops zusammenfällt oder in einer dazu konjugierten Ebene liegt. Bevorzugt ist eine Aufnahme der Kalibriervorrichtung 1 in einem körperlich in Fig. 4 nicht dargestellten Mehrfachobjektivwechsler oder Objektivrevolver, wodurch der Einfluss von temperaturabhängigen Ausdehnungseffekten minimiert wird und die Teststruktur 4 im Fokus bleibt.

Fig. 5 und 6 zeigen simultan in den zwei Empfangskanälen CH1, CH2 aufgenommene Testbilder, wobei das Reflexionsbild in Fig. 5 von einem Testgitter mit 20 µm Gitter-Periode stammt, das mit einem 488 nm Laserstrahl eines Argon-Lasers beleuchtet wurde und das Durchlichtbild in Fig. 6 vom selben Testgitter mit Hilfe der LED-Beleuchtung 7 erzeugt ist.
Durch Auswertung der Strukturpositionen in beiden Testbildern kann die Qualität des Justierzustandes von Anregungs- und Detektionsstrahlengang festgestellt werden, wobei Fig. 5 die Anregung mittels Laserspot und Fig. 6 die Detektion, d. h. die Pinholeposition repräsentieren.

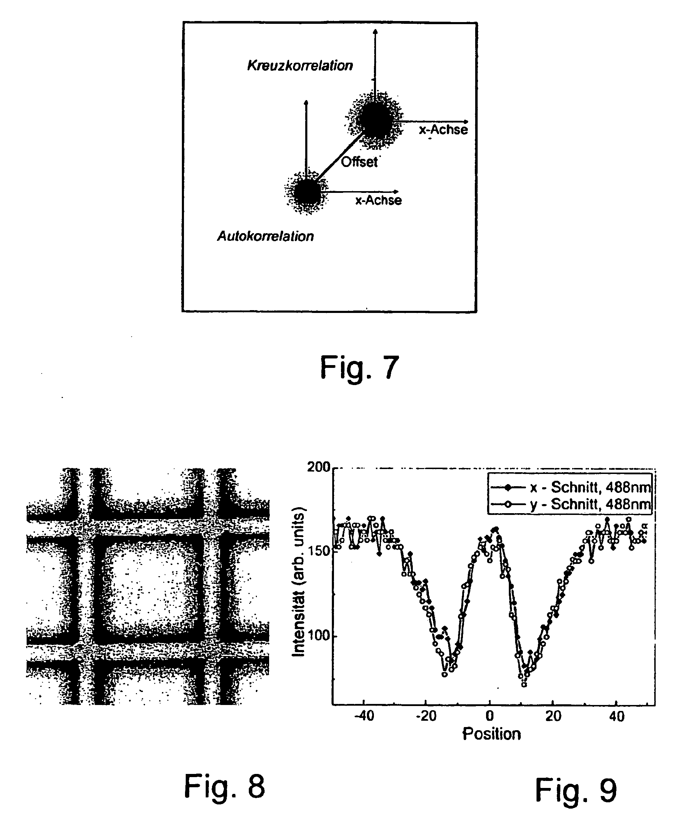

Gemäß Fig. 7 kann z. B. mittels bevorzugt automatischer Kreuzkorrelation ein Offset zwischen der Anregung und der Detektion festgestellt werden, wobei das Durchlichtbild jedoch vor der Auswertung invertiert werden sollte. Durch Übereinanderlegen der Koordinatenursprünge erfolgt die Überlappkorrektur von Anregung und Detektion, was auch automatisiert erfolgen kann.

Es ist mit der Erfindung möglich, die Pinholepositionierung visuell durch Superpositionierung der beiden Testbilder zu beurteilen, wie es Fig. 8 und 9 zeigen.

Die Anordnung gemäß Fig. 4 gestattet ferner, Signal-Rausch-Verhältnisse (SNR) zu messen, indem mittels weitgehend homogen abgestrahlten LED-Lichtes das Fluoreszenzlicht einer Volumenprobe simuliert wird, wobei das SNR hierbei entscheidend von der Kalibrierung der Pinholegröße beeinflusst wird. Wird eine Weißlicht-LED verwendet, so können SNR-Messungen in verschiedenen Spektralbereichen durchgeführt werden. Um den Detektionseffizienzverlauf vergleichbar über einen größeren Zeitraum erfassen zu können, müssen gleiche Filtereinstellungen und gleicher LED-Strom gewählt werden.

Messung des Signal-Rausch-Verhältnises (SNR-Test) mit einer fluoreszierenden festen oder flüssigen Kalibrierprobe
Ein homogen fluoreszierender Bereich der Kalibriervorrichtung 1 wird mit einer definierten Anregungslichtleistung beleuchtet und anschließend das Fluoreszenzlicht detektiert und ausgewertet. Zur Bestimmung der Detektionseffizienz des Mikroskops wird üblicherweise das Signal-Rausch-Verhältnis (SNR) nach der Bestimmung der Standardabweichung und des Mittelwerts berechnet, wonach SNR = Mittelwert/Standardabweichung gilt.

### Messung des Signal-Rausch-Verhältnises (SNR) mit einer kalibrierten Punktlichtquelle (z. B. einer 1Airy-LED)

Das Ergebnis einer Signal-Rausch-Verhältnis-Messung in der konfokalen Mikroskopie wird wesentlich von der Kalibrierung der konfokalen Blende (Pinhole) bestimmt. Ist beispielsweise das Bild der konfokalen Blende im Probenraum des Mikroskops im Durchmesser größer als 1Airy, wird zu viel fluoreszenzlicht detektiert und ein zu großes SNR bestimmt.
Abhilfe schafft eine isotrop in den Halbraum abstrahlende, kalibrierte Punktlichtquelle innerhalb der Kalibriervorrichtung 1, wobei die Öffnung der Punktquelle kleiner sein muss als der maximale Bilddurchmesser der konfokalen Blende im Probenraum. Bei Einstellung der maximalen Größe der konfokalen Blende gestaltet sich die SNR-Bestimmung unabhängig von der Kalibrierung der konfokalen Blende.
Praktisch ist die Teststruktur 4 der Kalibriervorrichtung 1, zur Erzeugung der Punktlichtquelle als eine im Durchlicht durchstrahlbare Ein-Loch-Maske ausgebildet, wobei die Öffnung mit definierten geometrischen Abmaßen beispielsweise durch Mikrostrukturierungsverfahren sehr genau gefertigt werden kann. Als Lichtquelle kann eine gemäß Fig. 1 in die Kalibriervorrichtung integrierte Licht emittierende Diode (LED) vorgesehen sein. Ist die Öffnung der kalibrierten Punktlichtquelle größer als die Beugungsgrenze der Fokussieroptik 3 in der Kalibriervorrichtung 1, so kann es sinnvoll sein, eine Lambert-Strahler-Lichtquelle (LED) zu verwenden, um die numerische Apertur der Fokussieroptik 3 ausnutzen zu können. Für eine Öffnung kleiner als die Beugungsgrenze sorgt die Beugung an der kleinen Öffnung für die Füllung der numerischen Apertur.

Ist die Punktlichtquelle in dem Sinne kalibriert, dass die Zahl der pro Zeiteinheit, pro Flächeneinheit und pro Raumwinkel emittierten Photonen bekannt ist, dann erlaubt die Messung auch die Bestimmung der absoluten Detektionseffizenz des Systems.

### Einkopplung von Testsignalen in den Probenbereich über eine modulierbare Lichtquelle, wie z. B. eine LED, auch faserbasiert, um Detektionseinheiten auf Hard- und Software Funktionen, wie z. B. Fluoreszenz-Korreiations-Spektroskopie (FCS) oder Heterodynes CARS bzw. FM-CARS testen zu können

Eine kalibrierte isotrope Punktlichtquelle innerhalb der Kalibriervorrichtung 1, wie z. B. eine im Durchlicht durchstrahlbare Ein-Loch-Maske mit mikrostrukturierter Öffnung und einer LED als Durchlichtquelle eignet sich nicht nur zur Bestimmung der Detektionseffizienz eines konfokalen Mikroskops, sondern sie kann auch von großem Nutzen für weitere auf dem konfokalen Prinzip basierende Verfahren sein.
So erlaubt die Fluoreszenz-Korrelations-Spektroskopie (FCS) die Gewinnung dynamischer Informationen über die Bewegung von fluoreszierenden Molekülen in Zellen oder einfach nur in Lösungen [Scanning Two-Photon Fluctuation Correlation Spectroscopy: Particle Counting Measurements for Detection of Molecular Aggregation; K. M. Berland, P. T. C. So, Y. Chen, W. W. Mantulin, and E. Gratton, Biophysical Journal, Vol.71, July 1996, 410-420]. Für sehr geringe Farbstoff-Konzentrationen (nM) im konfokalen Volumen entsteht eine Serie von Fluoreszenzphotonen-Impulsen und zwar genau dann, wenn ein bewegliches Farbstoff-Molekül den Fokus passiert. Die Länge eines Fluoreszenzlicht-Impulszuges wird durch die Zeit (Diffusionszeit), die das Molekül zum Durchqueren des konfokalen Volumens benötigt, bestimmt, die Intensität dagegen durch die molekulare "Brightness", das Produkt aus Extinktionskoeffizient und Quantenausbeute. Die mittlere Zeit zwischen zwei Impulsereignissen ist invers proportional zur mittleren Anzahl von Teilchen im Fokusvolumen.
Eine fehlerfreie Korrelationsanalyse setzt einwandfrei arbeitende Hardware (Optik, Detektoren plus Elektronik usw.) und Software (Korrelationsalgorithmen, mathematische Modelle und FIT-Routinen) voraus. Mittels der isotropen, kalibrierten Punktlichtquelle in der Kalibriervorrichtung 1 können definierte simulierte optische Testsignale, z. B. Lichtimpulse, die die Antwort der Diffusion von Farbstoff-Molekülen mit definierter molekularer "Brightness" simulieren, in das Mikroskop-System eingekoppelt und ausgewertet werden, so dass die Performance (Hardware und Software) des Gerätes für die Applikation ermittelt werden kann.

In einer anderen Ausgestaltung können die optischen Testsignale anstatt mit der im Durchlicht durchstrahlbaren Ein-Loch-Maske auch über eine Lichtleitfaser in die Kalibriervorrichtung eingekoppelt werden.

Neben FCS bietet sich für Hardware- und Software-Testzwecke auch das Einspeisen von phasen- und frequenz- und/oder amplitudenmodulierten optischen Testsignalen (über die Teststruktur 4 in der Kalibriervorrichtung 1) für die "Kohärente Anti-Stokes Raman-Streuungs-Mikroskopie" (CARS-Mikroskopie) an. Das CARS-Signal, das seinen Ursprung in einer nichtlinearen elektrischen Suszeptibilität 3. Ordnung hat, weist einen resonanten und nichtresonanten Anteil auf:
- Heterodyne coherent anti-Stokes Raman scattering (CARS) imaging; Eric O. Potma,* Conor L. Evans, and X. Sunney Xie, Optics Letters, Vol. 31, No. 2, January 2006, 241 - 243
- High-sensitivity vibrational imaging with frequency modulation coherent anti-Stokes Raman scattering (FM CARS) microscopy; Feruz Ganikhanov, Conor L. Evans, Brian G. Saar, and X. Sunney Xie, Vol. 31, No 12, June 2006, 1872-1874

Insbesondere der nichtresonante Anteil ist die Ursache dafür, dass das CARS-Signal nicht hintergrundfrei ist und entsprechend der Kontrast in der CARS-Mikroskopie reduziert wird. Durch geeignete Phasen- und Frequenzmodulation der Lichtquellen kann ein amplitudenmoduliertes und zu detektierendes CARS-Signal erzeugt werden, so dass durch Hardware- und Software Analyse/Filterung das kontrastreiche hintergrundfreie Signal (resonantes CARS-Bild) ermittelt werden kann.

### Messung der Auflösung / Point-Spread-Funktion (PSF)

Die Leistungsfähigkeit eines konfokalen Laser-Scanning-Mikroskops wird nicht nur durch die Detektionseffizienz für Fluoreszenzlicht bestimmt. Es ist essentiell, dass der Anregungsfokus beugungsbegrenzt ist, damit sowohl die maximale Auflösung entsprechend dem verwendeten Objektiv erreichbar ist, als auch maximal viel Fluoreszenzlicht bei einem auf 1Airy geschlossenem Pinhole, d. h. bei optimalem "z-sectioning", detektiert werden kann. Unter der Voraussetzung, dass die Fokussieroptik in der Kalibriervorrichtung beugungsbegrenzt fokussiert, deuten Abweichungen in der Fokussierbarkeit auf Fehler in der Beleuchtungs- und/oder Detektionsoptik hin.
Fehler können z. B. durch deformierte Spiegel, Abschattungseffekte durch unsachgemäß positionierte Farbteiler, falsch justierte Tubuslinsen oder Scanobjektive o. ä. verursacht sein. Die Güte des abbildenden Systems kann durch die Modulationsübertragungsfunktion (MTF) oder wenn Phasenverschiebungen auftraten, durch die komplexe optische Übertragungsfunktion (OTF) charakterisiert werden.
Die Messung der Übertragungsfunktion kann durch eine Analyse des Bildes einer Gitterstruktur, des Bildes einer punktförmigen Öffnung (Point Spread Function - PSF) oder aber durch die Analyse des Bildes einer Kante oder eines Spaltes durchgeführt werden. Dementsprechend kann die Teststruktur Strukturelemente zur Bestimmung der Übertragungsfunktion enthalten, um deren Bilder mit geeigneter Software zur Gewinnung von Aussagen über die optische Performance des Mikroskops auswerten zu können.

### Messung der Scanner-Linearitat/Scanner-Kalibrierung

Die Kalibrierung der Signale zur Scanneransteuerung ist z. B. in DE 10 2005 047 200 A1 beschrieben. Die Strukturelemente der Teststruktur können auf einfache Weise derart gestaltet werden, dass eine optische Auswertung zur Kalibrierung der Scanner möglich ist. Ebenso können z. B. auch die Positionssignale eines Positionssensors, der zur Messung der Scannerposition oder der aktuellen Messposition im Scanbild benutzt wird, kalibriert werden. Die Kalibrierung kann das Ausmessen der Übertragungsfunktionen der Positionssignale oder der Ansteuersignale einschließen (DE 10 2005 047 200 A1). Geeignete einfache Strukturelemente zur Kalibrierung der Scanner-Ansteuersignale sind z. B. periodische Gitter. Vorteilhafterweise enthält die Teststruktur 4 periodische Gitter sowohl in X-, als auch in Y-Richtung. Dabei kann derselbe Bereich der Teststruktur 4 auch gleichzeitig in X- und Y-Richtung periodisch strukturiert sein. Vorteilhafterweise sind Gitter mit verschiedenen Periodenlängen vorhanden, um eine Kalibrierung bei stark unterschiedlichen Scanamplituden vornehmen zu können.

### Anregungsunterdrückung und Transmission des Detektionsstrahlenganges

In der Fluoreszenzmikroskopie werden fluoreszierende Objekte aufgenommen, wobei das Fluoreszenzmikroskop das für die Fluoreszenz notwendige Anregungslicht zur Verfügung stellt. Die Wellenlängen des Anregungslichts und des von dem Objekt emittierten Fluoreszenzlichts hängen vom Farbstoff ab. Aufgrund unterschiedlicher Wellenlängenbereiche von Fluoreszenz- und Anregungslicht ist eine spektrale Trennung durchführbar. Diese Eigenschaft wird genutzt, um das Anregungslicht vom Detektor des Fluoreszenzmikroskops fernzuhalten.

Aufgrund einer in der Regel deutlich geringeren Intensität des Fluoreszenzlichtes gegenüber dem Anregungslicht detektieren "gute" Fluoreszenzmikroskope das emittierte Fluoreszenzlicht mit einer möglichst hohen Effizienz, wobei das Anregungslicht gleichzeitig sehr stark unterdrückt wird.

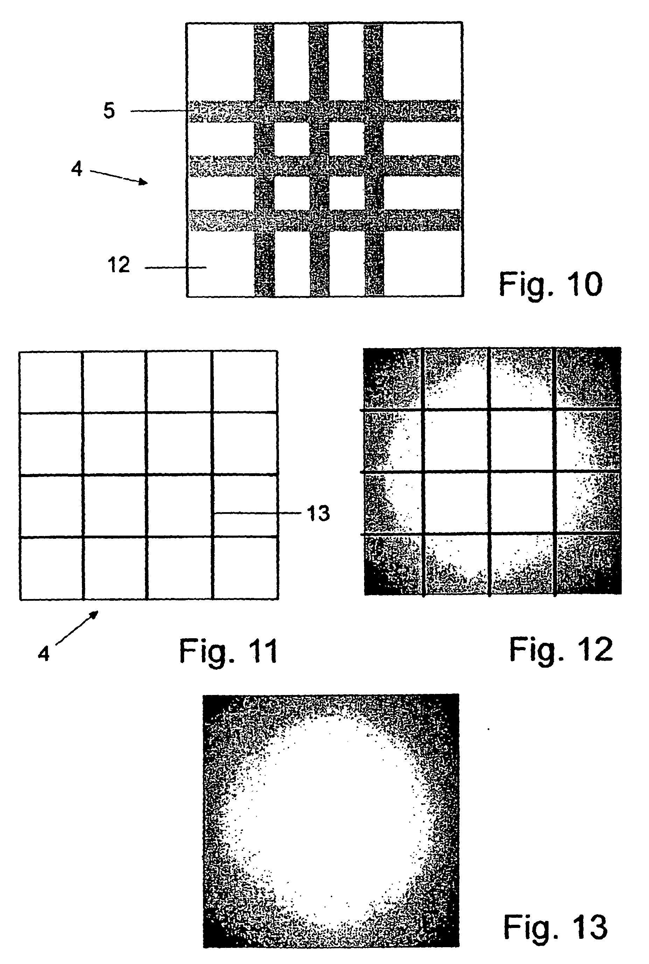

Soll eine Aussage über die Qualität eines Fluoreszenzmikroskops getroffen werden, so ist eine Bestimmung der Anregungsunterdrückung und der Detektionseffizienz unerlässlich. Es kommt eine Teststruktur 4 der Kalibriervorrichtung 1 gemäß Fig. 10 zur Anwendung, bei der als Strukturelemente reflektierende Gitterelemente 5 und zwischen den reflektierenden Gitterelementen 5 fluoreszierende Zwischengitterbereiche 12 mit bekannter Fluoreszenzeffizienz vorgesehen sind. In einem von der Teststruktur 4 aufgenommenen Testbild werden Intensitäten von Pixeln, die den reflektierenden Gitterelementen 5 und von Pixeln, die den fluoreszierenden Zwischengitterbereichen 12 zugehörig sind, getrennt ausgewertet, wobei eine Mittelung der Intensitätswerte durchgeführt werden kann. Aufgrund der bekannten Fluoreszenzeffizienz kann vom Fluoreszenzintensitätssignal auf die Intensität des Anregungslichtes geschlossen werden. Wird letztere ins Verhältnis zur gemessenen Reflexionsintensität an den reflektierenden Gitterelementen 5 gesetzt, ergibt sich ein Maß für die Anregungsunterdrütkung.

Bei einer weiteren Methode, die auf der Kenntnis der PMT-Gain-Kennlinie und der kalibrierten AOTF-Kenntinie basiert, wird zuerst ein PMT-Signal vom Laser in Reflexion mit Filtereinstellungen, die die direkte Detektion des laserlichtes ermöglichen, etwa durch Verwendung eines neutralen Hauptfarbteiters mit bekannter Transmissionskurve (z. B. HFT80/20), ermittelt. Die meist als PMT-Gain bezeichnete PMT-Hochspannung sollte dabei möglichst gering sein. Anschließend wird ein zu vermessender Fluoreszenzfilter in den Strahlengang eingeführt, die PMT-Hochspannung und gegebenenfalls auch die Laserleistung bei bekannter AOTF-Transmission soweit erhöht, bis in etwa das gleiche Signal erhalten wird, wie bei der direkten Detektion des Laserlichtes. Die Laserunterdrückung lässt sich aus den bekannten Kennlinien des Fluoreszenzfilters errechnen. Mit dieser Methode sind Messungen zur Unterdrückung mit OD4 bis OD5 möglich, wobei OD für Optical Density steht.

Die Bestimmung der Transmission des Detektionsstrahlenganges erfordert weitere Hilfsmittel, indem die Transmission direkt mit einer bekannten Referenzlichtquelle oder indem die Anregungsleistung, insbesondere eines Laser-Scanning.Mikroskops z. B. mit einem Laser-Power-Meter gemessen wird.

### Bestimmung der Ausleuchtungshomogenität

Insbesondere für die quantitative Mikroskopie ist es wichtig zu wissen, wie hell ein mikroskopiertes Objekt geleuchtet hat. Ein ideales Mikroskop "behandelt" alle Punkte innerhalb des Bildfeldes gleich; in Bezug auf die Helligkeit bedeutet das, dass gleich hell leuchtende Objekte auch gleich hell im Mikroskopbild dargestellt werden. In der Praxis kann diese Forderung allenfalls näherungsweise erfüllt werden. Insbesondere zum Rand des Mikroskopbildes hin sinkt häufig die Helligkeit des Bildes, z. B. auf Grund von optischer Vignettierung.

Mit der Kalibriervorrichtung kann die Ausleuchtung auf einfache Weise bestimmt werden, indem die Helligkeit der Teststruktur 4 ortsabhängig gemessen wird.
Zur Bestimmung der Ausleuchtung eignen sich, dem zu prüfenden Gerät angepasst, homogene Flächen oder Volumina, die reflektierend, streuend, fluoreszierend oder selbstleuchtend ausgeführt sein können.
Bei der vorliegenden Ausführung ist die Teststruktur 4 als homogen leuchtende Fläche ausgebildet, die für weitere Kalibrierzwecke, wie z. B. zur Vermessung der Geometrie des Bildfeldes, zusätzliche Strukturelemente in Form einer quadratischen Gitterstruktur 13 enthält (Fig. 11). Die zusätzlichen Strukturelemente unterscheiden sich von der homogen leuchtenden Fläche, indem sie heller oder dunkler sind oder z. B. in anderen Wellenlängenbereichen leuchten.
Zwar stören zunächst durch die zusätzlichen Strukturelemente erzeugte Inhomogenitäten im Testbild, doch lässt sich die Homogenität des Bildfeldes durch Herausrechnen der zusätzlichen Strukturelemente aus dem aufgenommenen Testbild dennoch bestimmen, wenn folgende Voraussetzungen erfüllt sind:
- Die zusätzlichen Strukturen sind bekannt.
- Das Ausleuchtungsprofil eines Mikroskops ändert sich über das Bildfeld in aller Regel nur langsam, steile Einbrüche sind nicht zu erwarten.
Im aufgenommenen Testbild (Fig. 12) zeigen sich die Zwischengitterbereiche nicht mehr homogen, wobei die Helligkeit zum Bildrand hin abnimmt. Die Gitterstruktur ist ebenfalls zu sehen.

Im nachbearbeiteten Testbild (Fig. 13) wurde die Gitterstruktur entfernt, so dass das Ausleuchtungsbild verbleibt. Die Helligkeit in Bereichen, die durch das Testgitter abgedeckt sind, kann durch Interpolation ermittelt werden, die zuverlässig ist, solange das Ausleuchtungsprofil des Mikroskops keine sprunghaften Änderungen beinhaltet.

## Patentansprüche

1. Verfahren zur Bestimmung und Korrektur des Justierzustandes zwischen Anregungs- und Detektionsstrahlengang eines Laser-Scanning-Mikroskops, das mindestens einen Laser zur Erzeugung eines Anregungsstrahls, eine Ablenkeinrichtung, die zur veränderlichen Ablenkung des Anregungsstrahls ausgebildet ist und mindestens einen Detektionskanal enthält, durch
- Anordnung einer Kalibriervorrichtung die zueinander in einer gemeinsamen Fassung (2) fest ausgerichtet eine Fokussieroptik (3) und eine in der Fokalebene (FE) der Fokussieroptik (3) angeordnete Teststruktur (4) mit im Auflicht und im Durchlicht nachweisbaren Strukturelementen aufweist,
im Strahlengang des Laser-Scanning-Mikroskops, wobei die Objektivpupille des Laser-Scanning-Mikroskops und die Pupille der Fokussieroptik des Kalibriermittels zusammenfallen oder in zueinander konjugierten Ebenen angeordnet sind,
- Abrasterung der Teststruktur mit dem Anregungsstrahl und Aufnahme eines Reflexions- oder Fluoreszenzbildes von der Teststruktur,
- Durchstrahlung der Teststruktur und Aufnahme eines Durchlichtbildes von der Teststruktur und
- Ermittlung der Strukturpositionen in dem Reflexions- oder Fluoreszenzbild und in dem Durchlichtbild und Bestimmung der gegenseitigen Positionsablagen.

2. Verfahren nach Anspruch 1, bei dem die Aufnahme des Reflexions- oder des Fluoreszenzbildes und des Durchlichtbildes gleichzeitig in voneinander getrennten Detektionskanälen erfolgt.

3. Verfahren nach Anspruch 2, bei dem die Bestimmung und Korrektur der gegenseitigen Positionsablagen automatisch durch Kreuzkorrelation erfolgt.

4. Verfahren nach Anspruch 3, bei dem das Fluoreszenzbild der Anregung und das Durchlichtbild der Detektion invertiert wird.

## Claims

1. Method for determining and correcting the state of adjustment between the excitation and detection beam paths of a laser scanning microscope, which includes at least one laser for generating an excitation beam, a deflecting device which is designed for the variable deflection of the excitation beam, and at least one detection channel, by means of
- arranging in the beam path of the laser scanning microscope a calibration device which has, in a fashion permanently aligned with one another in a common mount (2), a focusing optics (3) and a test structure (4) which is arranged in the focal plane (FE) of the focusing optics (3) and has structural elements detectable in reflected light and in transmitted light, the objective pupil of the laser scanning microscope and the pupil of the focusing optics of the calibration means coinciding or being arranged in mutually conjugate planes,
- scanning the test structure with the excitation beam and recording a reflection or fluorescence image of the test structure,
- transilluminating the test structure and recording a transmitted light image of the test structure, and
- determining the structural positions in the reflection or fluorescence image and in the transmitted light image, and determining the mutual positional offsets.

2. Method according to Claim 1, in which the recording of the reflection image or of the fluorescence image and of the transmitted light image is performed simultaneously in detection channels separated from one another.

3. Method according to Claim 2, in which the determination and correction of the mutual positional offsets are performed automatically by cross-correlation.

4. Method according to Claim 3, in which the fluorescence image of the excitation and the transmitted light image of the detection are inverted.

## Revendications

1. Procédé pour la détermination et la correction de l'état d'étalonnage entre le chemin de faisceau d'excitation et celui de détection d'un microscope à balayage laser contenant au moins un laser pour la génération d'un faisceau d'excitation, un dispositif de déviation formé pour la déviation variable du faisceau d'excitation et au moins un canal de détection, par
- implantation d'un dispositif de calibrage comportant une optique de focalisation (3) et une structure de test (4) disposée dans le plan focal (FE) de l'optique de focalisation (3), solidement alignées dans une monture commune (2), avec des éléments de structure détectables en lumière réfléchie et en lumière transmise, dans le chemin de faisceau du microscope à balayage laser, la pupille de l'objectif du microscope à balayage laser et la pupille de l'optique de focalisation du moyen de calibrage coïncidant ou étant disposées dans des plans mutuellement conjugués,
- balayage de la structure de test avec le faisceau d'excitation et enregistrement d'une image de réflexion ou de fluorescence de la structure de test,
- irradiation par transmission de la structure de test et enregistrement d'une image en lumière transmise de la structure de test et
- évaluation des positions de la structure dans l'image de réflexion ou de fluorescence et dans l'image en lumière transmise et détermination des stockages respectifs des positions.

2. Procédé selon la revendication 1, dans lequel l'enregistrement de l'image de réflexion ou de fluorescence et de l'image en lumière transmise s'effectue simultanément dans des canaux de détection mutuellement séparés.

3. Procédé selon la revendication 2, dans lequel la détermination et la correction des stockages respectifs des positions s'effectue automatiquement par corrélation croisée.

4. Procédé selon la revendication 3, dans lequel l'image de fluorescence de l'excitation et l'image en lumière transmise de la détection sont inversées.
